# EUROPÄISCHE PATENTANMELDUNG

(11) **EP 4 592 066 A1**
(43) Veröffentlichungstag der Anmeldung: **30.07.2025**
(21) Anmeldenummer: 25153551.4
(22) Anmeldetag: 23.01.2025
(51) Int. Cl.: B29C 65/76, B29C 65/02, B29C 65/00, B29C 35/08

(54) **VERFAHREN ZUM VERBINDEN ZWEIER FOLIENABSCHNITTE MIT EINER LOKALEN ÖFFNUNGSMÖGLICHKEIT**

(30) Priorität: 25.01.2024 DE 102024102135
(71) Anmelder: Fraunhofer-Gesellschaft zur Förderung der angewandten Forschung e.V., 80686 München (DE)
(72) Erfinder: Günther, Steffen, 01233 Dresden (DE); Kutschke, Elisa, 01233 Dresden (DE); Bork, Andreas, 01233 Dresden (DE); Mörbitz, Philip, 46047 Oberhausen (DE); Marbach, Lena, 46047 Oberhausen (DE); Neubauer, Jochen, 85354 Freising (DE); Stramm, Cornelia, 85354 Freising (DE)
(74) Vertreter: Gagel, Roland

(57) **Zusammenfassung**

Die Erfindung betrifft ein Verfahren zum Verbinden zweier Folienabschnitte (2) bei der Herstellung eines Formkörpers mit einer lokalen Öffnungsmöglichkeit, der zumindest teilweise aus einer oder mehreren Folien gebildet wird, bei dem die beiden Folienabschnitte (2) durch Siegeln miteinander verbunden werden. Das Verfahren zeichnet sich dadurch aus, dass wenigstens einer der Folienabschnitte (2) vor dem Siegeln lokal vollständig oder in einem oder mehreren Teilbereichen (3, 4, 5, 6) mit Elektronenstrahlung bestrahlt wird, um eine verringerte Festigkeit einer durch das Siegeln gebildeten Siegelnaht in dem jeweils bestrahlten Bereich zu erreichen. Damit lässt sich eine Dosieröffnung in einer Folienverpackung (1) ohne Integration eines starren Formkörpers oder der Problematik bei einem Aufreißen der Verpackung herstellen. Die Öffnung der Verpackung erfolgt an der durch die Elektronenbehandlung vorgegebenen Stelle einfach durch Zusammendrücken der Verpackung durch den Anwender.

## Beschreibung

### Technisches Anwendungsgebiet

Die vorliegende Erfindung betrifft ein Verfahren zum Verbinden zweier Folienabschnitte bei der Herstellung eines als Behältnis ausgebildeten Formkörpers zur Bildung einer lokalen Öffnungsmöglichkeit für eine Dosieröffnung, bei dem der Formkörper zumindest teilweise aus einer oder mehreren Folien gebildet wird, bei dem wenigstens einer der beiden Folienabschnitte ein Abschnitt einer thermoplastischen Kunststofffolie oder einer mit thermoplastischem Material beschichteten Folie ist und die beiden Folienabschnitte durch Siegeln miteinander verbunden werden. Die Erfindung betrifft auch einen Formkörper, insbesondere eine Folienverpackung, in dem eine lokale Öffnungsmöglichkeit mit dem erfindungsgemäßen Verfahren geschaffen wurde.

Das vorgeschlagene Verfahren lässt sich besonders vorteilhaft bei der Herstellung von Verpackungen einsetzen. Verpackungen für fließfähige, pastöse oder pulvrige Produkte benötigen eine leicht vom Anwender zu bedienende Öffnungsmöglichkeit. Diese kann aus einem in die eigentliche Folienverpackung eingebrachten starren Formkörper bestehen (z.B. Spout) oder kann durch eine definierte Aufreißmöglichkeit generiert werden. Das sichere und dichte Einbringen eines Formkörpers ist technisch aufwendig und technologisch von hohen Risiken geprägt. Die Aufreißvariante zeigt große Defizite beim Handling durch den Anwender, der Dosierfähigkeit des Verpackungsgutes und der Hygiene. Es besteht somit ein Bedarf an einem Verfahren zur einfachen Herstellung einer leicht vom Anwender zu öffnenden Dosieröffnung in einer Folienverpackung ohne Integration eines starren Formkörpers.

### Stand der Technik

Bisher sind unterschiedliche Techniken zur Herstellung einer Dosieröffnung in Verpackungen bekannt. So beschreibt beispielsweise die EP 2284095 A1 eine Verpackung mit vorgeschnittener Öffnung, die reversibel geöffnet und verschlossen werden kann. Zur Herstellung dieser Öffnung wird ein Spout in die Verpackung eingebracht. Aus der EP 2106373 B1 ist eine Folienverpackung bekannt, bei der eine Verschlussnaht einen sägezahnförmig verlaufenden Abschnitt mit Kerben aufweist und mit einer Anreißhilfe zum Öffnen der Verpackung verbunden ist. Eine Bereitstellung leicht zu öffnender Siegelnähte zur Öffnung von Verpackungen wird beispielsweise in der DE 603 12958 T2 beschrieben.

Wie bereits angeführt, weisen sowohl die Techniken unter Nutzung eines starren Formkörpers als auch die Aufreißvariante Nachteile bei der Herstellung oder dem Handling und der Dosierfähigkeit sowie der Hygiene auf.

Die Aufgabe der vorliegenden Erfindung besteht darin, ein Verfahren zur Schaffung einer Öffnungsmöglichkeit bei der Herstellung einer Folienverpackung anzugeben, das ohne die Integration eines Formkörpers auskommt, den Herstellungsprozess vereinfacht und technologisch von Risiken befreit ist. Der Anwender soll dann durch einfaches Handling in der Lage sein, eine entsprechende Öffnung der Verpackung zur Produktentnahme zu erreichen.

### Darstellung der Erfindung

Die Aufgabe wird mit dem Verfahren gemäß Patentanspruch 1 gelöst. Patentanspruch 9 gibt einen Formkörper, vorzugsweise als Folienverpackung an, bei dem mit dem vorgeschlagenen Verfahren eine entsprechende Öffnungsmöglichkeit als Dosieröffnung geschaffen wurde. Vorteilhafte Ausgestaltungen des Verfahrens und des Formkörpers sind Gegenstand der abhängigen Patentansprüche oder lassen sich der nachfolgenden Beschreibung sowie den Ausführungsbeispielen entnehmen.

Bei dem vorgeschlagenen Verfahren werden zwei Folienabschnitte bei der Herstellung eines Formkörpers, der als Behältnis mit einer lokalen Öffnungsmöglichkeit für eine Dosieröffnung dienen soll, durch Siegeln miteinander verbunden. Der Formkörper, insbesondere eine Folienverpackung, wird zumindest teilweise aus einer oder mehreren Folien gebildet. Ein erster der beiden Folienabschnitte ist ein Abschnitt einer siegelfähigen, vorzugsweise thermoplastischen Kunststofffolie oder einer mit siegelfähigem, vorzugsweise thermoplastischem Kunststoff beschichteten Folie. Das Verfahren zeichnet sich dadurch aus, dass wenigstens der erste Folienabschnitt vor dem Siegeln lokal vollständig oder in einem oder mehreren Teilbereichen mit Elektronenstrahlung bestrahlt wird, um eine verringerte Festigkeit einer durch das Siegeln gebildeten Siegelnaht in dem jeweils bestrahlten Bereich zu erreichen. Die lokale Bestrahlung kann dabei mit einem entsprechend fokussierten Elektronenstrahl oder einem Elektronenstrahl mit geringem Strahldurchmesser erfolgen, der den jeweiligen Bereich abtastet. Vorzugsweise erfolgt die Bestrahlung jedoch mit Hilfe einer Maske oder Maskierung, beispielsweise aus einem metallischen Material, die die Elektronenstrahlung nur an einer entsprechenden Öffnung durchtreten und auf den Folienabschnitt gelangen lässt. Auf diese Weise kann ein technisch einfacheres System zur Erzeugung der Elektronenstrahlung genutzt werden, welche auf großer Breite oder Fläche arbeitet. Vorzugsweise sind beide Folienabschnitte Abschnitte einer siegelfähigen, vorzugsweise thermoplastischen Kunststofffolie oder einer mit siegelfähigem, vorzugsweise thermoplastischem Kunststoff beschichteten Folie und die Bestrahlung erfolgt in beiden Folienabschnitten entsprechend vollständig oder in einem oder mehreren jeweils korrespondierenden Teilbereichen dieser Folienabschnitte.

Bei dem Verfahren wird ausgenutzt, dass durch die Elektronenstrahlung die beim Siegeln genutzte starke Erhöhung der Polymerkettenbeweglichkeit der jeweiligen Kunststoffe bzw. Polymere der siegelfähigen Kunststofffolie oder siegelfähigen Kunststoffschicht verringert wird, so dass in den bestrahlten Bereichen eine gegenüber nicht bestrahlten Bereichen verringerte Siegelnahtfestigkeit erreicht wird. Über die Bestrahlungsdosis lässt sich die gewünschte Siegelnahtfestigkeit einstellen, die auch von dem jeweils bestrahlten Kunststoff bzw. Polymer abhängig ist. Im Verpackungsbereich werden häufig Polyolefin-Folien verwendet, aus denen eine Verpackung geformt wird, indem ein Volumen durch die Folie umschlossen wird. Die Folie kann dabei auch aus mehreren Teilstücken oder Materialien bestehen. An geeigneter Stelle wird die Folie dazu mit sich selbst oder mit weiteren Teilstücken durch Siegeln verbunden. Der Zweck des Siegelns von Verpackungen besteht in der absolut dichten und festen Zusammenführung von siegelfähigen Packstoffen.

Die am häufigsten eingesetzten Siegelverfahren für Verpackungen sind das Wärmekontakt-Siegeln und das Kaltsiegeln. Beim Kaltsiegeln ist lediglich ein Anpressdruck erforderlich, um zwei mit Kaltklebstoffen beschichtete Bahnen zusammenzuführen. Beim Wärmekontakt-Siegeln werden zwei übereinander liegende, siegelfähige Packstoffe bzw. Folien mittels beheizter Siegelwerkzeuge über einen definierten Zeitraum hinweg unter Anpressdruck mit Wärme beaufschlagt. Dabei geschieht entweder ein Aufschmelzen der Kunststoffe (mit einer damit verbundenen starken Erhöhung der Polymerkettenbeweglichkeit) oder zumindest eine starke Erhöhung der Polymerkettenbeweglichkeit. Beides führt zu einer Vermengung der Kunststoffe an der Kontaktstelle der siegelfähigen Packstoffe bzw. Folien. Beim Abkühlen der Siegelstelle bildet sich dann ein untrennbarer Zustand der beiden Kunststofffolien. Alternativ können auch beispielsweise metallische Folien verwendet werden, von denen zumindest eine mit einer entsprechenden Schicht aus einem siegelfähigen, vorzugsweise thermoplastischen Kunststoff beschichtet ist. Weitere Beispiele für Siegelverfahren sind Lasersiegeln oder Ultraschall-Siegeln, die letztlich ebenfalls auf der Vermengung der zu verbindenden Materialien beruhen. Beim vorgeschlagenen Verfahren können alle Siegelverfahren eingesetzt werden, bei denen beim Siegeln eine starke Erhöhung der Polymerkettenbeweglichkeit auftritt, die durch eine Bestrahlung mit Elektronenstrahlung vor dem Siegeln verringert werden kann.

Bei der Anwendung im Verpackungsbereich findet das beim vorgeschlagenen Verfahren bevorzugt eingesetzte Wärmekontakt-Siegeln in mehreren nacheinander ablaufenden Prozessschritten statt. Zwischen diesen Prozessschritten erfolgt das Befüllen der Verpackung mit dem zu verpackenden Gut. Letztlich wird eine allseitig geschlossene Verpackung erhalten, die das abgefüllte Gut enthält. Die Festigkeit von Siegelnähten wird unter einachsiger Zugbeanspruchung quer zur Siegelnaht bestimmt (z.B. DIN 55529:2012-09). Je nach Siegelnahtfestigkeit werden die Öffnungseigenschaften klassifiziert von Soft Peel (bis 6 N/15 mm), über Easy Peel (6 bis 10 N/15 mm) und Peel (10 bis 15 N/15 mm) bis zu Festverschluss (>15 N/15 mm).

Beim vorgeschlagenen Verfahren wird nun beim Siegeln zweier Folienabschnitte, beispielsweise zur Herstellung einer vorangehend beschriebenen Verpackung, je nach beabsichtigter Größe der späteren Öffnung entweder der gesamte Folienabschnitt oder ein Teilbereich des jeweils zu versiegelnden Abschnittes vorab lokal mit Elektronen beaufschlagt. Dadurch zeichnet sich dieser (bestrahlte) Bereich durch eine bei gleichen Siegelparametern verringerte Siegelnahtfestigkeit gegenüber einem nicht mit Elektronen beaufschlagten Bereich der gleichen oder einer anderen Siegelnaht des Formkörpers aus und bietet somit eine lokale Öffnungsmöglichkeit an dieser Stelle. Unter der lokalen Bestrahlung des Folienabschnittes oder eines Teilbereiches davon ist dabei immer zu verstehen, dass nicht die gesamte Folie, sondern lediglich der Folienabschnitt oder ein Teilbereich dieses Abschnitts mit Elektronenstrahlung beaufschlagt wird. Der elektronenbehandelte Bereich definiert so für die spätere Verpackung bzw. den späteren Formkörper den Bereich der Öffnung. Die Öffnung der Verpackung durch den Anwender kann dabei einfach durch Zusammendrücken der Verpackung erfolgen. Der sich aufbauende Druck bewirkt das Öffnen an der schwächsten Stelle der Siegelnaht oder Siegelnähte, welche durch den Bereich der Elektronenbehandlung vorgegeben ist. Mit dem vorgeschlagenen Verfahren lassen sich somit Öffnungsmöglichkeiten einer Verpackung oder eines Behältnisses nach außen hin erzeugen.

Zur Vermeidung eines unkontrollierten Herausspritzens des verpackten Gutes aus der Öffnung kann der mit Elektronen behandelte Bereich speziell geformt und/oder strukturiert sein. So kann der mit Elektronenstrahlung behandelte Teilbereich des Folienabschnittes beispielsweise eine trapezförmige Form aufweisen, die sich - und damit auch die spätere Öffnung - ausgehend vom Innenvolumen der Verpackung nach außen hin erweitert. Auch eine mäanderförmige Struktur des Teilbereiches kann zur Vermeidung des Herausspritzens von Vorteil sein. Die Elektronenbehandlung kann darüber hinaus auch lateral innerhalb des bestrahlten Bereiches von unterschiedlicher Intensität sein, so dass innerhalb der bestrahlten Fläche der Siegelnaht die Öffnungskraft variiert. So kann bspw. die Bestrahlungsdosis über den bestrahlten Bereich so variiert werden, dass die Siegelnahtfestigkeit vom Innenvolumen nach außen hin zunimmt oder nach außen hin abnimmt. Die letztgenannte Ausgestaltung ist bei Verpackungen bevorzugt, da sie eine stärkere Kontrolle der Öffnungsdynamik erlaubt und dadurch ein unkontrolliertes Herausspritzen des Inhaltes vermeiden kann. Ein Gradient in der auf den jeweiligen Bereich applizierten Dosis und somit eine Variation der Siegelnahtfestigkeit über diesen Bereich kann beispielsweise bei Bestrahlung des Folienabschnitts mit Hilfe einer Maskierung durch eine variierende Dicke des Maskierungsmaterials erreicht werden.

Die trapezförmige Form kann sich auch ausgehend vom Innenvolumen auch nach außen hin verjüngen, wodurch eine Art Düsenwirkung entsteht. Unter den Begriff der trapezförmigen Form wird in der vorliegenden Patentanmeldung keine rechteckige Form verstanden.

Durch den Einsatz geringer Mengen eines geeigneten Additivs bei der Herstellung der jeweiligen siegelfähigen Kunststofffolie bzw. der Beschichtung einer Folie mit einem siegelfähigen Kunststoff kann der durch die Elektronenbestrahlung hervorgerufene Effekt der Ausbildung von Verzweigungen und Vernetzungen und damit der Verringerung der Polymehrkettenbeweglichkeit noch verstärkt werden. Unter Additiven sind hierbei Funktionsadditive (Weichmacher, Nukleierungsmittel, Rheologie-Modifikatoren, Schlagzähigkeits-Modifikatoren etc.), Prozessadditive (Gleitmittel, Antislip etc.) und reaktive Additive zu verstehen. Die reaktiven Additive verstärken den Effekt der Elektronenbehandlung durch die Ausbildung von Verzweigungen und Vernetzungen. Reaktive Additive sind definiert als Substanzen, die Radikale bilden können. Insbesondere polyfunktionelle Mono-, Oligo- und Polymere wie Acrylate, Methacrylate, Bismaleimide, Metallsalze, High-vinyl 1,2-Polybutadien, Divinylbenzol und Allylester der Cyanurate, Isocyanurate oder Schwefel sind hierfür geeignet.

Für die Elektronenbehandlung wird bei dem vorgeschlagenen Verfahren vorzugsweise ein System zur Beschleunigung von Elektronen genutzt, wie es beispielsweise auch im Druck- und Lackierbereich zum Einsatz kommt und dort zur Vernetzung von Druckfarben oder der Lackhärtung verwendet wird. Dabei werden frei bewegliche Elektronen innerhalb eines Vakuums z.B. durch Glühemission erzeugt und durch Anlegen eines elektrischen Potentials auf Energien bis zu mehreren 100 keV beschleunigt. Aufgrund der Energie der Elektronen sind diese in der Lage, durch eine dünne Metallfolie oder ein anderes elektronentransparentes Material hindurchzutreten. Dies wird genutzt, um die Elektronen aus dem Vakuum in einen Bereich unter Atmosphärendruck übertreten zu lassen, in dem die Bestrahlung der Folienabschnitte bei dem vorgeschlagenen Verfahren dann durchgeführt wird. Innerhalb der Atmosphäre weisen diese Elektronen eine Reichweite von mehreren 10 cm auf. Entsprechend kann ein zu behandelndes Material im Abstand einiger Zentimeter vor dem Elektronenaustrittsfenster positioniert oder vorbeigeführt werden und mit den Elektronen wechselwirken. Das vorgeschlagene Verfahren schließt jedoch eine Elektronenbehandlung mit anderen technischen Systemen nicht aus. Die Bestrahlung erfolgt dabei vorzugsweise jeweils mit einer Elektronendosis im Bereich zwischen 10 und 100 kGy in Abhängigkeit vom bestrahlten Material und der gewünschten Siegelnahtfestigkeit.

Das vorgeschlagene Verfahren lässt sich vorteilhaft bei der Herstellung von Verpackungen für Lebensmittel, Kosmetika, Pharmazeutika, Chemikalien sowie anderweitigen pulverförmigen pastösen Materialien, Klebstoffen, Fetten, Ölen etc. einsetzen. Auch wenn die Hauptanwendung in der Schaffung von Öffnungsmöglichkeiten bei derartigen Verpackungen liegt, lässt sich das vorgeschlagene Verfahren auch bei der Herstellung anderer Formkörper einsetzen, die zum Teil aus einer oder mehreren Folien gebildet sind und in denen eine entsprechende Öffnungsmöglichkeit geschaffen werden soll.

### Kurze Beschreibung der Zeichnungen

Das vorgeschlagene Verfahren wird nachfolgend anhand von Ausführungsbeispielen in Verbindung mit den Zeichnungen nochmals näher erläutert. Hierbei zeigen:
- Fig. 1: eine schematische Darstellung eines ersten Beispiels der Form eines mit Elektronenstrahlung bestrahlten Teilbereichs gemäß dem vorgeschlagenen Verfahren;
- Fig. 2: eine schematische Darstellung eines zweiten Beispiels der Form eines mit Elektronenstrahlung bestrahlten Teilbereichs gemäß dem vorgeschlagenen Verfahren;
- Fig. 3: eine schematische Darstellung eines dritten Beispiels der Form eines mit Elektronenstrahlung bestrahlten Teilbereichs gemäß dem vorgeschlagenen Verfahren;
- Fig. 4: eine schematische Darstellung eines vierten Beispiels der Form eines mit Elektronenstrahlung bestrahlten Teilbereichs gemäß dem vorgeschlagenen Verfahren; und
- Fig. 5: ein Beispiel für die Siegelnahtfestigkeit in Abhängigkeit von der Intensität einer Elektronenbehandlung gemäß dem vorgeschlagenen Verfahren.

### Wege zur Ausführung der Erfindung

In den folgenden Beispielen werden Folienverpackungen hergestellt und entsprechende Folienabschnitte dieser Folienverpackungen durch Siegeln miteinander verbunden. Gemäß dem vorgeschlagenen Verfahren wird dabei der zu versiegelnde Abschnitt oder ein Teilbereich dieses Abschnitts vor dem Siegeln mit Elektronenstrahlung behandelt, um die Siegelnahtfestigkeit definiert in dem jeweils bestrahlten Bereich gegenüber den verbleibenden Bereichen oder anderen Siegelnähten der Folienverpackung herabzusetzen.

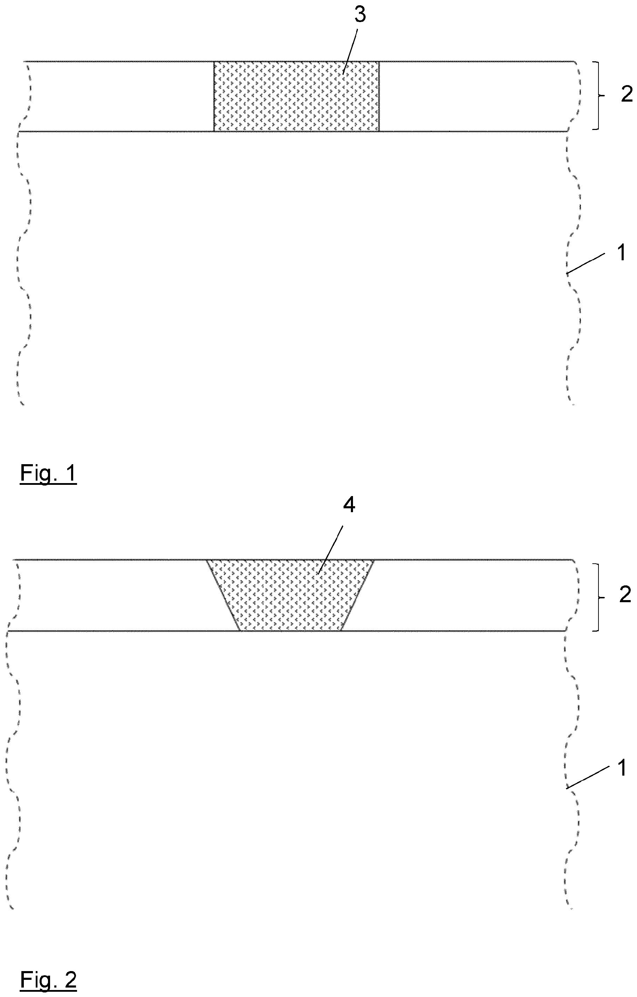

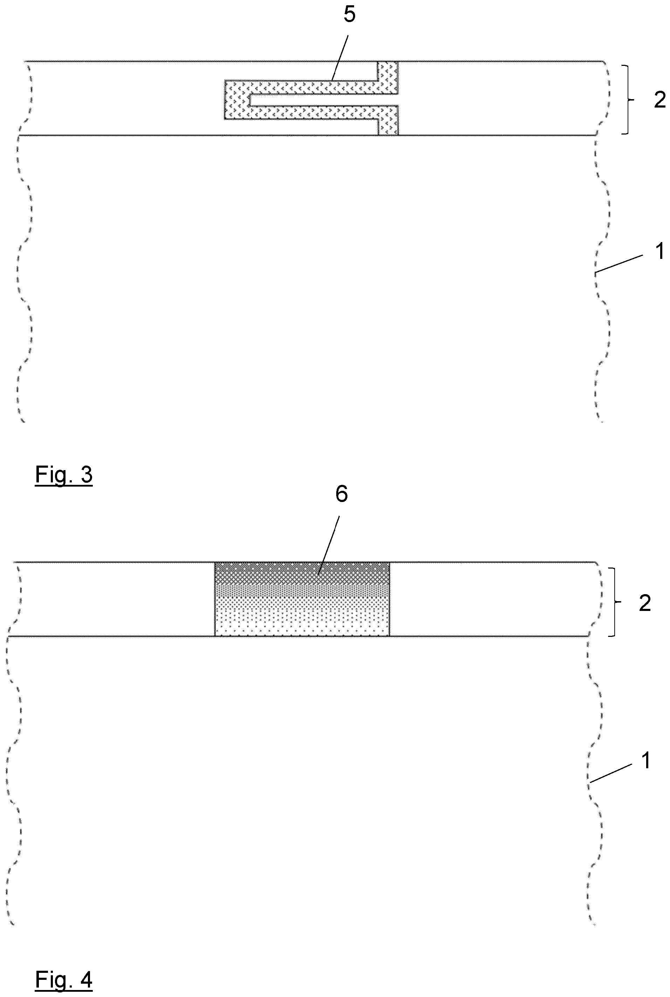

Die Figuren 1 bis 4 zeigen hierzu in stark schematisierter Darstellung ein Beispiel für eine Folienverpackung 1, an deren oberem Ende zwei Folien mit entsprechenden Folienabschnitten 2 übereinandergelegt und versiegelt wurden. Vor dem Siegeln wurde hierbei jeweils ein Teilbereich wenigstens eines dieser Abschnitte mit Elektronenstrahlung so behandelt, dass durch das Siegeln eine gegenüber den verbleibenden Bereichen verringerte Siegelnahtfestigkeit erreicht wird. Im Beispiel der Figur 1 wurde hierzu ein rechteckförmiger Teilbereich 3 mit Elektronenstrahlung behandelt. Im Beispiel der Figur 2 wurde ein trapezförmiger Teilbereich 4, bei dem sich die Trapezform nach außen hin erweitert, und im Beispiel der Figur 3 ein mäanderförmiger Teilbereich 5 mit Elektronenstrahlung bestrahlt. Diese beiden letztgenannten Formen des Teilbereichs verhindern ein schnelles Herausspritzen des Füllgutes bei ausreichendem Druck auf die Verpackung. Die Siegelnaht öffnet sich hierbei ausgehend vom Innenvolumen der Verpackung nach außen entsprechend dem bestrahlten Teilbereich. Weiterhin besteht auch die Möglichkeit, die Bestrahlungsdosis über dem jeweiligen Teilbereich zu variieren, so dass beispielsweise ein Gradient der Siegelnahtfestigkeit entsteht, wie dies in dem Beispiel der Figur 4 mit dem Teilbereich 6 einer variierenden Elektronendosis angedeutet ist. Auch durch eine derartige Ausgestaltung lässt sich der Öffnungsvorgang steuern, so dass die Gefahr eines Herausspritzens des Füllgutes verringert wird.

Im Folgenden werden verschiedene Anwendungsbeispiele des vorgeschlagenen Verfahrens für unterschiedliche Verpackungen beschrieben.

### Anwendungsbeispiel 1 - Ketchup-Verpackung-quer:

Eine 22 cm breite Kunststofffolie der Materialmischung HDPE und LDPE (50/50) mit einer Länge von 1000 m liegt aufgewickelt als Rolle vor. Diese 100 µm dicke Folie wird in einer Rolle-zu-Rolle-Anlage umgewickelt und während des Umwickelns jeweils in 1 cm breiten Randbereichen mit einem entsprechend der Bahngeschwindigkeit getakteten Elektronenstrahler mit einer Bestrahlungsdosis von 50 kGy bestrahlt. Die Taktfrequenz ist dabei so eingestellt, dass alle 5 cm Folienlänge ein 1 cm langer Folienbereich bestrahlt wird. Der Elektronenstrahler arbeitet dabei mit einer Beschleunigungsspannung von 150 kV. Anschließend wird die behandelte Kunststofffolie in eine Maschine zur Verpackungsformung transferiert. In dieser wird das Folienmaterial entlang der Maschinenrichtung mittig gefaltet, so dass eine 11 cm breite, zweilagige Bahn entsteht. Dabei kommen die mit dem Elektronenstrahl behandelten Randbereiche aufeinander zu liegen. Diese Bahn wird mittels 2 cm breiten Heißsiegelbacken quer zur Maschinenrichtung alle 5 cm gesiegelt. Die Siegelung erfolgt dabei so, dass die mit dem Elektronenstrahl behandelten Bereiche jeweils mittig zwischen den Quersiegelungen positioniert sind. Die so entstandenen Beutel werden befüllt und anschließend mit einer 1 cm breiten Siegelbacke an der noch offenen Seite gesiegelt und somit geschlossen. Anschließend erfolgt die Vereinzelung der Beutel. Es entsteht ein 5 cm breiter und 11 cm hoher Einzelbeutel, gefüllt mit Ketchup. In diesem Beutel kann durch einfaches Drücken mittels Handkraft in der Mitte der 5 cm langen Siegelnaht eine Öffnung erzeugt werden, durch die das Ketchup einfach dosiert werden kann.

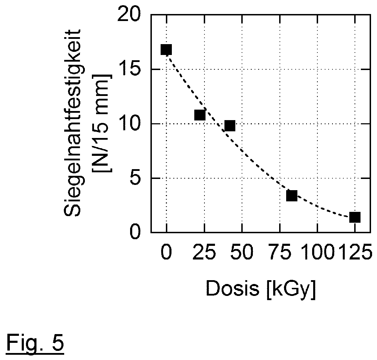

Beispielhaft werden in Figur 5 Siegelnahtfestigkeiten des beschriebenen Materials in Abhängigkeit verschieden intensiver Elektronenbehandlungen dargestellt. Die eingestellte Temperatur des Siegelwerkzeuges betrug jeweils 130 °C. Wie aus der Figur 5 zu entnehmen ist, verringern sich die Siegelnahtfestigkeiten mit zunehmender Intensität der Elektronenbehandlung (Zunahme der Dosis).

### Anwendungsbeispiel 1b - Ketchup-Verpackung-längs:

Ein 5 cm breites Verpackungsfolienlaminat (Mehrschichtaufbau) mit einer 35 µm dicken Siegelschicht aus LDPE mit einer Länge von 1000 m liegt aufgewickelt als Rolle vor. Diese insgesamt 100 µm dicke Folie wird in einer Rolle-zu-Rolle-Anlage umgewickelt und während des Umwickelns mit einem entsprechend der Bahngeschwindigkeit getakteten Elektronenstrahler mit einer Bestrahlungsdosis von 50 kGy bestrahlt. Die Taktfrequenz ist dabei so eingestellt, dass alle 20 cm Folienlänge ein 2 cm langer Folienbereich über die gesamte Breite bestrahlt wird. Der Elektronenstrahler arbeitet dabei mit einer Beschleunigungsspannung von 150 kV. Anschließend wird die behandelte Kunststofffolie in eine Maschine zur Verpackungsformung transferiert. In dieser wird das Folienmaterial entlang der Maschinenrichtung mittig gefaltet, so dass eine 2,5 cm breite, zweilagige Bahn entsteht. Dabei kommen die mit dem Elektronenstrahl behandelten Bereiche aufeinander zu liegen. Diese Bahn wird mittels 1 cm breiten Heißsiegelbacken entlang der Maschinenrichtung auf der offenen Seite gesiegelt. Anschließend erfolgt die getaktete Befüllung der entstandenen röhrenförmigen Verpackung und gleichzeitig wird mittels einer 2 cm breiten Heißsiegelbacke quer zur Maschinenrichtung alle 10 cm gesiegelt. Diese Siegelung erfolgt dabei so, dass die mit dem Elektronenstrahl behandelten Bereiche jeweils mittig zu den Quersiegelungen positioniert sind. Es entsteht durch diesen Vorgang der aufeinander abgestimmten Befüllung und Quersiegelung ein gefüllter, allseitig geschlossener Beutel. Anschließend erfolgt die Vereinzelung der Beutel, wobei die Vereinzelung jeweils mittig auf der Quersiegelung erfolgt, so dass diese in zwei Hälften von ca. 1 cm Breite aufgeteilt wird. Durch die Bestrahlung alle 20 cm und die darauf abgestimmte Siegelung alle 10 cm entsteht ein 2,5 cm breiter und 10 cm langer Einzelbeutel, gefüllt mit Ketchup. In diesem Beutel kann durch einfaches Drücken mittels Handkraft an lediglich einer der zwei Schmalseiten eine Öffnung erzeugt werden, durch die das Ketchup einfach dosiert werden kann.

### Anwendungsbeispiel 1c - Ketchup-Verpackung-längs mit kleinerer Dosieröffnung:

Obiges Beispiel wird dergestalt abgewandelt, dass die getaktete Bestrahlung nicht homogen über der gesamten Breite der Folienbahn erfolgt, sondern durch eine entsprechende Maskierung der Strahlung mittels eines 1 mm dicken Metallbleches aus Edelstahl nur die rechte und linke Seite jeweils auf einer Breite von 1,5 cm behandelt wird. Durch die nachträgliche, mittige Faltung der behandelten Materialbahn kommen die behandelten Bereiche aufeinander zu liegen und gewährleisten eine behandelte Breite von lediglich 1,5 cm auf nur einer Seite. Dadurch wird beim späteren Drücken mittels Handkraft lediglich eine Ecke der Verpackung geöffnet, was zusätzlich die Dosierung erleichtert.

### Anwendungsbeispiel 1d: Sachets für Kosmetikproben mit hoher Viskosität:

Für pastöse Verpackungsgüter wird ein Sachet wie in Beispiel 1c hergestellt. Die Siegelschicht besteht dabei aus der Materialmischung HDPE und LDPE (60/40), additiviert mit 0,8 pph Triallyl-isocyanurat. Die Gesamtdicke des Laminates beträgt 60 um. Das Sachet weist gegenüber der Variante 1c eine verringerte Öffnungskraft auf für seniorenfreundliche Personal-Care-Produkte.

### Anwendungsbeispiel 2 - Verpackungsmaschine mit inkludierter Elektronenstrahlanlage

Eine 22 cm breite Kunststofffolie der Materialmischung HDPE und LDPE (50/50) mit einer Länge von 1000 m liegt aufgewickelt als Rolle vor. Diese 50 µm dicke Folie wird in eine Verpackungsmaschine gegeben, die semi-kontinuierlich Verpackungen durch entsprechende Falt- und Heißsiegelprozesse herstellt, befüllt und verschließt. Diese Verpackungsmaschine ist mit einem Elektronenstrahler ausgestattet, welcher getaktet im Gleichtakt mit der Gesamtanlage arbeitet und jeweils einen trapezförmigen Bereich an einem Bahnrand mit einer Dosis von 50 kGy bei einer Beschleunigungsspannung von 130 kV bestrahlt. Die Trapezform wird dabei durch eine geeignet gestaltete Metallmaske zwischen dem Elektronenstrahler und der Kunststofffolie erzeugt. Vor dem Elektronenstrahler erfolgt die mittige Faltung der Bahnware, so dass eine 11 cm breite, zweilagige Bahn entsteht, die vom Elektronenstrahler an der Seite der offen aufeinanderliegenden Folien durchstrahlt wird. Die gesamte Maschine ist so getaktet, dass die Bahn mittels 2 cm breiten Heißsiegelbacken quer zur Maschinenrichtung alle 5 cm gesiegelt wird. Die Siegelung erfolgt dabei so, dass die mit dem Elektronenstrahl behandelten Bereiche jeweils mittig zwischen den Quersiegelungen positioniert sind. Die so entstandenen Beutel werden befüllt und anschließend mit einer 1 cm breiten Siegelbacke an der noch offenen Seite gesiegelt und somit geschlossen. Anschließend erfolgt die Vereinzelung der Beutel. Es entsteht ein 5 cm breiter und 11 cm hoher Einzelbeutel, welcher in der Mitte der 5 cm langen Siegelnaht eine Öffnungsmöglichkeit aufweist. Diese kann durch Druck auf den Beutel geöffnet werden, wobei das trapezförmige Profil der Bestrahlung sicherstellt, dass der Beutelinhalt nicht herausspritzt, sondern dosiert entnommen werden kann.

### Anwendungsbeispiel 3 - Soßenflasche mit versiegeltem Folienverschluss

Für Soßen mit Dosierverschluss werden in der Regel Folien auf die Behälteröffnung gesiegelt, welche den Produktschutz vor dem ersten Öffnen gewährleisten. Wird für diese Folien das gleiche Material wie für den Behälter genutzt, sind die Siegelkräfte häufig so hoch, dass die erste Öffnung deutlich erschwert ist. Um diesem Problem zu begegnen wird eine Deckelfolie aus HDPE, additiviert mit 0,5 pph Trimethylolpropantriacrylat, in einer Rolle-zu-Rolle-Anlage umgewickelt und während des Umwickelns mit einem entsprechend der Bahngeschwindigkeit getakteten Elektronenstrahlers mit einer Bestrahlungsdosis von 50 kGy bestrahlt. Die Taktfrequenz ist dabei so eingestellt, dass die Bereiche, an denen sich im weiteren Prozess die Öffnungslasche der Deckelfolie befindet, bestrahlt werden. Der Elektronenstrahler arbeitet dabei mit einer Beschleunigungsspannung von 150 kV. Im Anschluss wird die Deckelfolie auf die HDPE-Behälter thermisch gesiegelt. Die Kombination aus verminderte Siegelkraft und Öffnungslasche gewährleistet eine vereinfachte Öffnung.

### Anwendungsbeispiel 4 - Einsatz eines kontinuierlichen Elektronenstrahlers

Während die bisher beschriebenen Beispiele einen getakteten Elektronenstrahler verwenden, der jeweils beidseits (spiegelsymmetrisch) arbeitet, wird im Folgenden ein Beispiel angeführt, bei dem ein kontinuierlich laufender Elektronenstrahler auf einer Seite der Folienbahn verwendet wird.

Eine 21 cm breite Kunststofffolie (HDPE/LDPE 50/50) wird kontinuierlich auf einer Seite in einem 1 cm breiten Bereich entlang der Maschinenrichtung bestrahlt. Im Folgenden wird die Folienbahn mittig zur Maschinenrichtung gefaltet, so dass die Randbereiche aufeinander zu liegen kommen. Im Anschluss erfolgt eine 2 cm breite Siegelung quer zur Maschinenrichtung auf der gesamten Breite der gefalteten Bahn alle 2,5 cm und eine Vereinzelung in einzelne Verpackungen, wobei die Vereinzelung mittig innerhalb der Siegelung erfolgt. Die einzelnen Verpackungen werden dann gefüllt und an der noch offenen Schmalseite gesiegelt, um eine allseitig geschlossene Verpackung zu erhalten. Die Siegelung an der Schmalseite ist dabei aufgrund der Elektronenbehandlung an dieser Stelle durch eine geringere Siegelnahtfestigkeit gekennzeichnet, die ein späteres einfaches Öffnen mit Handkraft ermöglicht.

Bei der Anwendung des vorgeschlagenen Verfahrens zur Herstellung von Verpackungen lässt sich die Verpackung einfach, ohne Hilfsmittel und definiert öffnen. Es ist keine zusätzliche Materialmenge zur Bereitstellung der Öffnungsmöglichkeit notwendig, wie sie sonst z.B. als Aufreißlasche benötigt würde. Die gesamte Verpackung kann dabei aus einer Materialart (Monomaterial) hergestellt werden und ist dementsprechend einfach zu rezyklieren.

### Bezugszeichenliste

- 1: Folienverpackung
- 2: Versiegelte Folienabschnitte
- 3: bestrahlter rechteckförmiger Teilbereich
- 4: bestrahlter trapezförmiger Teilbereich
- 5: bestrahlter mäanderförmiger Teilbereich
- 6: Teilbereich mit Gradienten in der Bestrahlungsdosis

## Patentansprüche

1. Verfahren zum Verbinden zweier Folienabschnitte (2) bei der Herstellung eines als Behältnis ausgebildeten Formkörpers, insbesondere einer Folienverpackung (1), zur Bildung einer lokalen Öffnungsmöglichkeit für eine Dosieröffnung in dem Behältnis, bei dem der Formkörper zumindest teilweise aus einer oder mehreren Folien gebildet wird, bei dem wenigstens ein erster der beiden Folienabschnitte (2) ein Abschnitt einer siegelfähigen Kunststofffolie oder einer mit siegelfähigem Kunststoff beschichteten Folie ist und die beiden Folienabschnitte (2) durch Siegeln miteinander verbunden werden,
**dadurch gekennzeichnet,**
**dass** wenigstens der erste Folienabschnitt (2) vor dem Siegeln lokal vollständig oder in einem oder mehreren Teilbereichen (3, 4, 5, 6) mit Elektronenstrahlung bestrahlt wird, um eine verringerte Festigkeit einer durch das Siegeln gebildeten Siegelnaht in dem jeweils bestrahlten Bereich zu erreichen.

2. Verfahren nach Anspruch 1,
**dadurch gekennzeichnet,**
**dass** beide Folienabschnitte (2) Abschnitte einer siegelfähigen Kunststofffolie oder mit siegelfähigem Kunststoff beschichteten Folie sind und die Bestrahlung mit Elektronenstrahlung vor dem Siegeln in jedem der beiden Folienabschnitte (2) erfolgt.

3. Verfahren nach Anspruch 1 oder 2,
**dadurch gekennzeichnet,**
**dass** die Bestrahlung mit einer Maske erfolgt, durch die eine Form des bestrahlten Bereiches festgelegt wird.

4. Verfahren nach einem der Ansprüche 1 bis 3,
**dadurch gekennzeichnet,**
**dass** die Bestrahlung in einem trapez- oder mäanderförmigen Teilbereich (4, 5) erfolgt.

5. Verfahren nach einem der Ansprüche 1 bis 4,
**dadurch gekennzeichnet,**
**dass** die Bestrahlung mit einer über den Teilbereich (6) oder Folienabschnitt variierenden Dosis erfolgt.

6. Verfahren nach einem der Ansprüche 1 bis 5,
**dadurch gekennzeichnet,**
**dass** die Bestrahlung mit einer Dosis zwischen 10 und 100 kGy erfolgt.

7. Verfahren nach einem der Ansprüche 1 bis 6,
**dadurch gekennzeichnet,**
**dass** die Verbindung der beiden Folienabschnitte (2) durch Wärmekontakt-Siegeln erfolgt.

8. Verfahren nach einem der Ansprüche 1 bis 6,
**dadurch gekennzeichnet,**
**dass** Kunststofffolien oder mit siegelfähigem Kunststoff beschichtete Folien verwendet werden, bei denen dem Kunststoff Additive zur Verstärkung einer durch die Elektronenstrahlung bewirkten Ausbildung von Verzweigungen und Vernetzungen beigefügt wurden.

9. Formkörper, insbesondere Folienverpackung, der als Behältnis mit einer lokalen Öffnungsmöglichkeit zur Bildung einer Dosieröffnung ausgebildet ist, bei dem wenigstens zwei Folienabschnitte (2) unter Bildung einer Siegelnaht durch Siegeln miteinander verbunden sind,
wobei die Folienabschnitte (2) oder ein oder mehrere Teilbereiche (3, 4, 5, 6) davon vor dem Siegeln gemäß dem Verfahren nach einem der Ansprüche 1 bis 8 lokal mit Elektronenstrahlung bestrahlt wurden, um die lokale Öffnungsmöglichkeit zu bilden.
